# EUROPÄISCHE PATENTSCHRIFT

(11) **EP 3 744 592 B1**
(45) Veröffentlichungstag und Bekanntmachung des Hinweises auf die Patenterteilung: **08.06.2022**
(21) Anmeldenummer: 20170801.3
(22) Anmeldetag: 22.04.2020
(51) Int. Cl.: B60T 17/08

(54) **BREMSZYLINDER MIT EINER ARRETIERUNGSVORRICHTUNG ZUR MECHANISCHEN BREMSKRAFTVERRIEGELUNG**
BRAKE CYLINDER WITH A LOCKING DEVICE FOR MECHANICAL BRAKE FORCE LOCKING
CYLINDRE DE FREIN POURVU DE DISPOSITIF D'ARRÊT DESTINÉ À L'ARRÊT MÉCANIQUE DE LA FORCE DE FREINAGE

(30) Priorität: 24.05.2019 DE 102019113930
(43) Veröffentlichungstag der Anmeldung: 02.12.2020
(73) Patentinhaber: KNORR-BREMSE Systeme für Schienenfahrzeuge GmbH, 80809 München (DE)
(72) Erfinder: MATHIEU, Michael, 82178 Puchheim (DE); HECHT, Ferdinand, 85229 Markt Indersdorf (DE)

(56) Entgegenhaltungen:
- WO-A1-01/81144
- DE-B1- 2 748 540
- US-A- 4 777 867

## Beschreibung

Die Erfindung betrifft einen Bremszylinder mit einer Arretierungsvorrichtung zur mechanischen Bremskraftverriegelung nach dem Oberbegriff des Anspruchs 1.

Mit derartigen Bremszylindern sind Schienenfahrzeuge ausgerüstet. Abgestellte Schienenfahrzeuge müssen gegen Wegrollen gesichert werden. Dazu ist eine Feststellbremse mit den zugehörigen Bremszylindern vorgesehen, welche eine entsprechend hohe Bremskraft auch ohne externe Energieversorgung sicherstellen muss.

Eine solcher Bremszylinder von Schienenfahrzeugen muss die nachfolgenden Kriterien erfüllen:
- Sicherung des Fahrzeugs gegen unbeabsichtigtes Wegrollen
- Dauerhafte Sicherstellung der erforderlichen Feststellkraft unabhängig von einer externen Energieversorgung
- Zugweite Aktivierung / Deaktivierung von verschiedenen Führerständen des Fahrzeugs
- Manuelle Deaktivierung (Notlösen) der Parkbremse bei Verlust der regulären Betätigungsenergie

Diese Kriterien sollen durch einen Bremszylinder erfüllt werden, indem die bestehende Betriebsbremse eingelegt und mechanisch arretiert wird. Der Arretierungsmechanismus wird dabei durch den so genannten Steuerdruck geschaltet.

Eine manuelle Deaktivierung der Feststellbremse, die auch Parkbremse genannt wird, bedeutet, dass der Arretiermechanismus unter Einwirkung der Verriegelungskraft gelöst werden muss. Da die Betätigungskraft für die manuelle Deaktivierung der Feststellbremse in der Regel höher ist als die menschliche Handkraft, ist für das Notlösen eine Kraftübersetzung notwendig.

Ebenso ist es möglich, dass ein Steuerkolben den Arretiermechanismus (z.B. im Abschleppfall) unter Einwirkung der Verriegelungskraft lösen muss. Für diesen Fall muss die Kolbenfläche des Steuerkolbens derart ausgelegt sein, dass er bei einem definierten Druck eine ausreichende Lösekraft erzeugt.

Das Dokument WO 01/81144 A1 beschreibt einen Bremszylinder mit einer Gewindespindel und einer Sperrklinke.

Das Dokument EP 2826684 B1 beschreibt einen Bremszylinder für Schienenfahrzeuge, bei welchem die Feststellbremse durch die Blockierung der Betriebsbremse realisiert wird. Hierbei ist die Blockiervorrichtung innerhalb des Betriebsbremsendruckraumes angeordnet. Bei einem derartigen Bremszylinder mit mechanischer Bremskraftverriegelung ist eine manuelle Notlöseeinrichtung erforderlich, die im drucklosen Zustand den Kraftschluss im Arretiermechanismus unterbricht und dadurch die Feststellbremse löst. Es wird eine Ausführung beschrieben, bei der die Notlöseeinrichtung unmittelbar auf den Steuerkolben wirkt. Der Steuerkolben wiederum wirkt unmittelbar auf die Arretierungsvorrichtung. Der in dem Dokument EP 2826684 B1 beschriebene Bremszylinder besitzt einen vergleichsweise kleinen Betriebskolben, die Kolbenkraft wird durch eine nachgeschaltete mechanische Übersetzung verstärkt. Dadurch sind die Kräfte auf die Arretiervorrichtung vergleichsweise gering.

Daher besteht die Aufgabe der Erfindung darin, für einen Bremszylinder ohne nachgeschaltete mechanische Übersetzung eine Arretierungsvorrichtung zur mechanischen Bremskraftverriegelung bereitzustellen, welche geringe Steuer- bzw. Notlösekräfte erfordert.

Die Aufgabe wird durch einen Bremszylinder mit den Merkmalen des Anspruchs 1 gelöst.

Ein Erfindungsgedanke besteht darin, dass das Steuerorgan und das ohnehin mit einer Übersetzung versehene Notlöseorgan dergestalt angeordnet sind, dass das Steuerorgan bei seiner Betätigung auf das Notlöseorgan wirkt. Dadurch ist gewährleistet, dass das Steuerorgan den Arretiermechanismus mit einer Kraftübersetzung deaktiviert.

Damit ergeben sich folgende Vorteile:
- Reduzierung der erforderlichen Steuerkraft
- Reduzierung des erforderlichen Durchmesser des Steuerorgans
- Reduzierung des erforderlichen Bauraumes

Ein erfindungsgemäßer Bremszylinder mit einer Arretierungsvorrichtung zur mechanischen Bremskraftverriegelung, insbesondere für Schienenfahrzeuge, und mit einem innerhalb eines Gehäuses axial bewegbaren Betriebsbremskolben, der durch Beaufschlagung mit einem Druckmedium bewegbar und mit einem Kolbenrohr in Eingriff ist, wobei das Kolbenrohr mit einem nicht selbsthemmenden Gewinde, das in Eingriff mit einer in dem Gehäuse drehbar gelagerten Gewindemutter steht, ausgebildet ist, wobei die Arretierungsvorrichtung mit einer Verzahnung der Gewindemutter zusammenwirkt, wobei die Arretierungsvorrichtung eine oder mehrere Sperrklinke/n, einen Steuerkolben, ein Notlöseorgan und ein Verriegelungselement des Notlöseorgans aufweist, ist so ausgebildet, dass die Arretierungsvorrichtung eine Betätigungseinrichtung aufweist, welche den Steuerkolben, das Notlöseorgan in Gestalt eines Notlösekeils, mindestens ein Verriegelungselement, mindestens ein Kraftspeicherelement und eine Anbindung zum manuellen Lösen umfasst.

Der Eingriff des Betriebsbremskolbens mit dem Kolbenrohr kann dadurch realisiert sein, dass der Kolben z.B. mit dem Kolbenrohr fest verbunden (verschraubt) ist. Der Betriebsbremskolben kann auch nur lose eingelegt sein. Der Kolben drückt dann bei Druckbeaufschlagung auf das Ende des Kolbenrohres.

Der erfindungsgemäße Bremszylinder erfüllt die eingangs genannten Kriterien vorteilhaft, indem die bestehende Betriebsbremse eingelegt und mechanisch arretiert wird. Die Arretierungsvorrichtung wird dabei durch den sogenannten Steuerdruck über die Betätigungseinrichtung geschaltet bzw. aus einer Arretierungsstellung in eine gelöste Stellung zurück verstellt. Die Betätigungseinrichtung wird bei nicht vorhandenem Steuerdruck manuell verstellt und dann automatisch verriegelt, um eine notgelöste Stellung der Arretierungsvorrichtung zu erreichen und aufrecht zu erhalten. Die manuelle Deaktivierung der Parkbremse (Notgelöster Zustand) wird dauerhaft gehalten, um sicherzustellen, dass der Notlösevorgang vollständig abgelaufen ist, und der Arretiermechanismus nicht wieder eingreifen kann. Erst durch erneute Steuerdruckbeaufschlagung wird der notgelöste Zustand aufgehoben.

Es ergeben sich die besonderen Vorteile, dass die Notlösevorrichtung dauerhaft verriegelt werden kann, wodurch sichergestellt ist, dass der Notlösevorgang vollständig ablaufen kann.

In bevorzugter Ausführung sind der Steuerkolben, der Notlösekeil und das mindestens eine Kraftspeicherelement hintereinander, konzentrisch zueinander und in Bezug auf eine gemeinsame Steuerachse angeordnet. Damit ergibt sich ein kompakter und raumsparender Aufbau.

Eine weitere Ausführung sieht vor, dass der Steuerkolben, der Notlösekeil und das mindestens eine Kraftspeicherelement in einem Führungskanal in dem Gehäuse axial verschiebbar in Richtung der Steuerachse geführt angeordnet sind. Damit kann eine einfache Ausführung ermöglicht werden.

Vorteilhafte Weiterbildungen der Erfindung sind durch die Gegenstände der Unteransprüche angegeben.

In einer weiteren Ausführung ist der Steuerkolben mit dem Notlösekeil gekoppelt. Dies ist vorteilhaft, da so der Steuerkolben über den Notlösekeil auf die Arretiervorrichtung mittels dessen Kraftübersetzung einwirken kann.

Eine andere Ausführung sieht vor, dass der Steuerkolben in einer ersten Steuerrichtung relativ zu dem Notlösekeil und in einer zweiten zu der ersten Steuerrichtung entgegengesetzten Steuerrichtung zumindest teilweise in einem ersten Endabschnitt des Notlösekeils in dessen Längsrichtung und der Richtung der Steuerachse verschiebbar geführt angeordnet ist. Dies ergibt den Vorteil einer Bauraumreduzierung.

Wenn der Steuerkolben in dem unteren Endabschnitt des Notlösekeils verschiebbar geführt und durch eine Feder axial in die zweite Steuerrichtung wirkend vorgespannt ist, wobei der Steuerkolben in mittels einer Axialsicherung axial in dem Notlösekeil gehalten und auf diese Weise mit dem Notlösekeil gekoppelt ist, kann der Steuerkolben vorteilhafterweise nicht nur Druckkräfte auf den Notlösekeil übertragen, sondern auch durch die Relativbewegung zu dem Notlösekeil weitere Funktionen zur Steuerung des Verriegelungselementes übernehmen.

Eine noch weitere Ausführung sieht vor, dass das Verriegelungselement verschiebbar geführt angeordnet und durch eine Feder in Richtung seiner Längsachse vorgespannt ist. Dies ergibt einen einfachen Aufbau.

So kann in einer Ausführung die Längsachse des Verriegelungselementes rechtwinklig zu der Steuerachse des Steuerkolbens verlaufen, um eine vorteilhafte Verriegelung mit einem ortsfesten Bauteil zu gewährleisten.

Das Verriegelungselement kann in einem ersten Endabschnitt des Notlösekeils in einer Führungsaufnahme angeordnet sein, wodurch ein Raumbedarf vorteilhaft weiter reduziert werden kann.

Alternativ kann das Verriegelungselement auch in dem Gehäuse angeordnet sein. Denkbar ist es auch, das zwei oder auch mehr Verriegelungselemente vorgesehen werden können, entweder beide oder alle in dem Notlösekeil, beide oder alle in dem Gehäuse oder verteilt auf Notlösekeil und Gehäuse.

In einer noch weiteren Ausführung steht der Steuerkolben mit einer Konusfläche mit einem Konusabschnitt des Verriegelungselementes in Eingriff. Dies ist vorteilhaft, da so eine einfache Bewegungsübertragung ermöglicht werden kann, denn der Steuerkolben führt seine Relativbewegung zu dem Notlösekeil in gemeinsamer Längsachse aus, wohingegen das von dem Steuerkolben bewegte Verriegelungselement sich rechtwinklig dazu bewegt.

Eine Ausführung sieht vor, dass die Arretierungsvorrichtung aus einer Arretierungsstellung, in welcher die eine oder mehrere Sperrklinke/n durch einen Eingriff mit der Verzahnung der Gewindemutter deren Verdrehung um die Kolbenachse blockieren, in eine gelöste Stellung, in welcher die Sperrklinken außer Eingriff mit der Verzahnung der Gewindemutter stehen und die Gewindemutter in ihrer Verdrehung nicht blockieren, mittels der Betätigungseinrichtung verstellt ist, wenn die Betätigungseinrichtung aus einer unbetätigten Grundposition mit Steuerdruck beaufschlagt in eine Löseposition verstellt ist. Dieses ermöglicht einen kompakten Aufbau.

Zudem ist es in einer weiteren Ausführung vorteilhaft möglich, dass die Arretierungsvorrichtung aus der Arretierungsstellung in die gelöste Stellung als eine notgelöste Stellung verstellt werden kann, wenn die Betätigungseinrichtung aus der unbetätigten Grundposition manuell in eine Notlöseposition verstellt ist, wobei eine Verriegelung mit dem Verriegelungselement gebildet ist. So ergibt sich ein einfacher funktioneller Aufbau.

In einer noch weiteren Ausführung verriegelt das Verriegelungselement in der Notlöseposition der Betätigungseinrichtung den Notlösekeil der Betätigungseinrichtung in Bezug auf das ortsfeste Gehäuse automatisch. Hierbei ist es besonders vorteilhaft, dass das Verriegelungselement durch die Vorspannkraft der mit ihm gekoppelten Feder bei Erreichen der Notlöseposition der Betätigungseinrichtung automatisch verriegelt.

Besonders vorteilhaft ist es in einer noch weiteren Ausführung, dass die Verriegelung der Betätigungseinrichtung mit dem Verriegelungselement in der Notlöseposition der Betätigungseinrichtung entriegelt ist, wenn die Betätigungseinrichtung in der Notlöseposition mit Steuerdruck beaufschlagt ist. Damit kann eine einfache Steuerung ermöglicht werden, zusätzliche Steuerelemente sind nicht erforderlich.

Eine noch weitere Ausführung sieht vor, dass Steuerkolben, Verriegelungselement mit Feder und Kraftspeicherelement derart aufeinander abgestimmt sind, dass die erforderliche Druckkraft des Steuerkolbens zum Entriegeln des Verriegelungselements geringer ist als die zum Verschieben der Betätigungseinrichtung in Lösestellung erforderliche Kraft. Dies kann z.B. durch eine entsprechende Auslegung der Federkräfte des Kraftspeicherelementes und der Feder erreicht werden, wobei die Federkraft der Feder geringer ist als die Federkraft des Kraftspeicherelementes. Weitere Faktoren dazu sind der Kegelwinkel der Konusfläche des Steuerkolbens und des Konusabschnitts des Verriegelungselementes.

Ein Ausführungsbeispiel der Erfindung wird nachfolgend anhand der beigefügten Zeichnungen beschrieben.

Es zeigen:
- Figur 1: einen schematischer Längsschnitt eines Ausführungsbeispiels eines erfindungsgemäßen Bremszylinders mit einer Arretierungsvorrichtung;
- Figur 2: eine schematische Schnittansicht der Arretierungsvorrichtung längs Schnittlinie II-II des Ausführungsbeispiels nach Figur 1 in einer eingebremsten Stellung des erfindungsgemäßen Bremszylinders;
- Figur 3: eine orthogonale schematische Schnittansicht der Arretierungsvorrichtung nach Figur 2;
- Figur 4: die Schnittansicht der Arretierungsvorrichtung nach Figur 3 in einer notgelösten Stellung des erfindungsgemäßen Bremszylinders;
- Figur 5: die Schnittansicht der Arretierungsvorrichtung nach Figur 3 in einer gelösten bzw. wiederbereiten Stellung des erfindungsgemäßen Bremszylinders; und
- Figur 6: eine vergrößerte Ansicht einer Betätigungseinrichtung der Arretierungsvorrichtung nach Figur 2 bis 5.

Die Begriffe "unten", "oben", "links" und "rechts" beziehen sich auf die Anordnung(en) in der jeweiligen Figur.

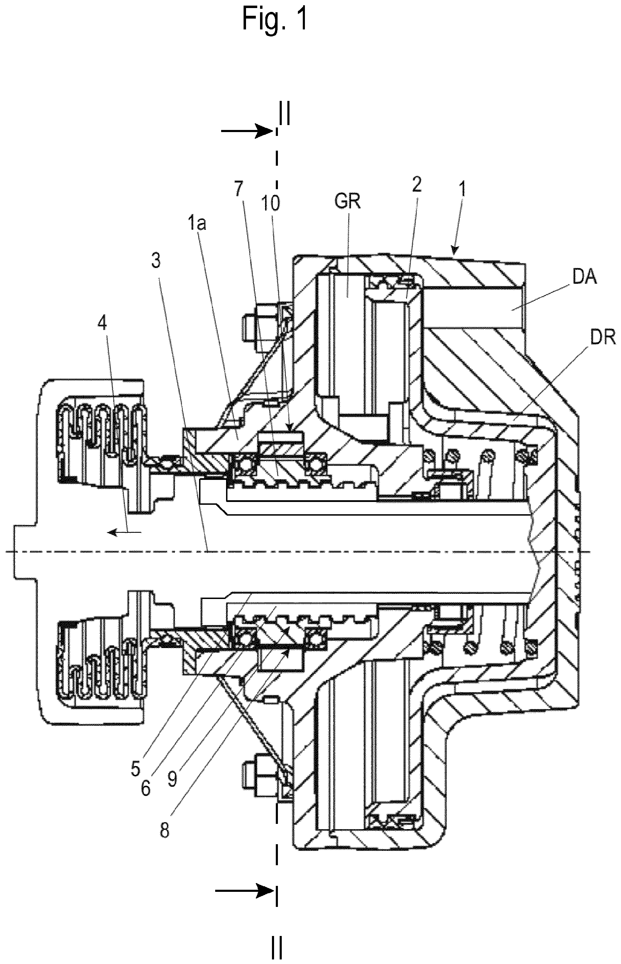

**Figur 1** zeigt einen schematischen Längsschnitt eines Ausführungsbeispiels eines erfindungsgemäßen Bremszylinders 1 mit einer Arretierungsvorrichtung 10.

Der Bremszylinder 1 weist die Arretierungsvorrichtung 10 als mechanische Bremskraftverriegelung auf und ist für den Einsatz bei Schienenfahrzeugen vorgesehen.

Der allgemein bekannte Aufbau und die Funktion des Bremszylinders 1 werden hier nicht weiter im Detail beschrieben.

In einem Gehäuse 1a des Bremszylinders 1 ist ein Gehäuseinnenraum GR angeordnet, in welchem ein Betriebsbremskolben 2 längs einer Kolbenachse 3 in einer Bewegungsrichtung 4 verschiebbar angeordnet ist.

Der Betriebsbremskolben 2 trennt einen Druckraum DR von dem Gehäuseinnenraum GR des Gehäuses 1a ab. Der Druckraum DR ist mit einem Druckanschluss DA verbunden, durch welchen der Druckraum DR mit einem Druckmedium, z.B. Druckluft, und somit der Betriebsbremskolben 2 beaufschlagt werden kann.

Der Betriebsbremskolben 2 ist mit einem Ende eines Kolbenrohres 5 im Eingriff, welches sich durch das Gehäuse 1a längs der Kolbenachse 3 erstreckt und mit einer nicht gezeigten Kolbenstange verbunden ist. Der Eingriff des Betriebsbremskolbens 2 mit dem Kolbenrohr 5 kann dadurch realisiert sein, dass der Betriebsbremskolben 2 z.B. mit dem Kolbenrohr 5 fest verbunden (verschraubt) ist. Der Betriebsbremskolben 2 kann auch nur lose eingelegt sein. Der Betriebsbremskolben 2 drückt dann bei Druckbeaufschlagung auf das Ende des Kolbenrohres 5. Die Kolbenstange überträgt bei einem Bremsvorgang eine Bremskraft auf ein (hier nicht dargestelltes) Bremsgestänge eines Schienenfahrzeuges.

Das andere Ende des Kolbenrohres 5 weist einen Gewindeabschnitt 6 mit einem Außengewinde auf, der fest mit dem Kolbenrohr 5 verbunden ist. Das auf dem Kolbenrohr 5 angebrachte Gewinde 9 des Gewindeabschnitts 6 steht in Eingriff mit einem Innengewinde einer in dem Gehäuse 1a gelagerten Gewindemutter 7. Das Gewinde 9 ist nicht selbsthemmend ausgeführt. Die Gewindemutter 7 ist in dem zugehörigen Abschnitt des Gehäuses 1a drehbar um die Kolbenachse 3 gelagert und axial fixiert.

Werden der Druckraum DR des Bremszylinders 1 über den Druckanschluss DA und somit der Betriebsbremskolben 2 mit Druck beaufschlagt, bewegt sich der Betriebsbremskolben 2 zusammen mit dem Kolbenrohr 5 in der Bewegungsrichtung 4 (hier in der Figur 1) nach links.

Diese axiale Bewegung des Betriebsbremskolbens 2 und des Kolbenrohres 5 in Richtung der Kolbenachse 3 bewirkt aufgrund des nicht selbsthemmenden Gewindeeingriffs von dem Gewindeabschnitt 6 und der Gewindemutter 7 eine Drehung der Gewindemutter 7 um die Kolbenachse 3. Wird die Drehung der Gewindemutter 7 durch eine Arretierung behindert, wird zugleich die Axialbewegung des Betriebsbremskolbens 2 gesperrt. Eine solche Arretierung wird hier durch die Arretierungsvorrichtung 10 gebildet, welche mit einer äußeren Verzahnung 8 der Gewindemutter 7 zusammenwirkt.

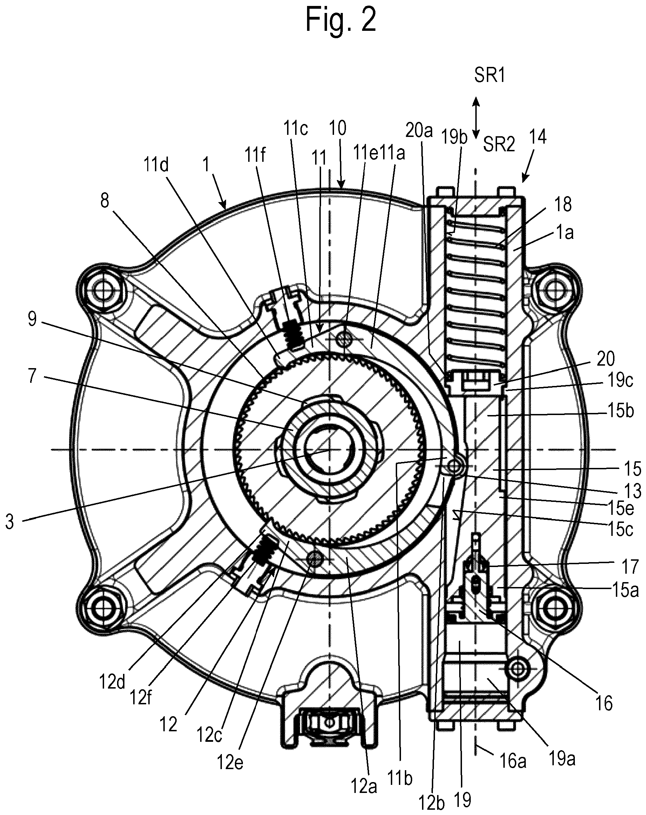

Die Arretierungsvorrichtung 10 wird im Weiteren im Zusammenhang mit den Figuren 2 bis 6 erläutert.

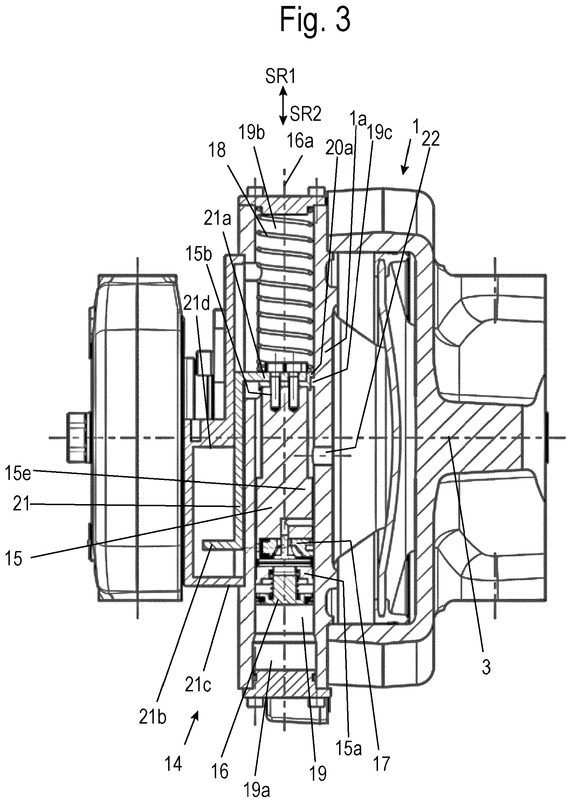

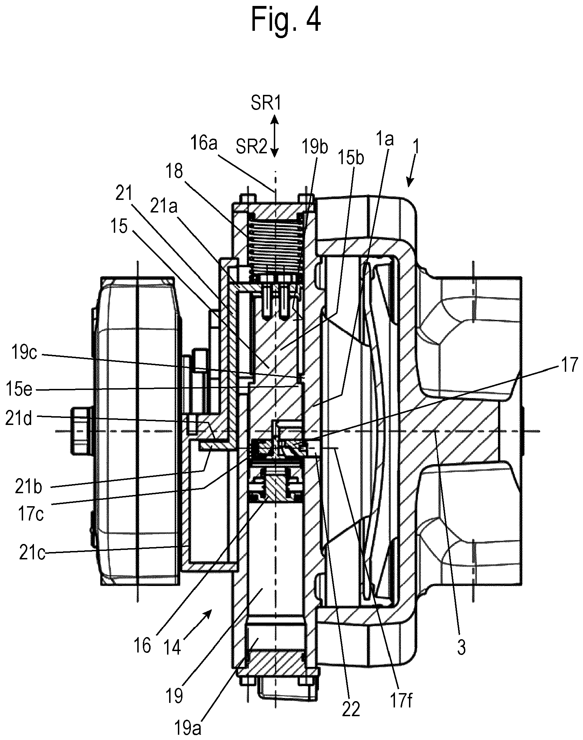

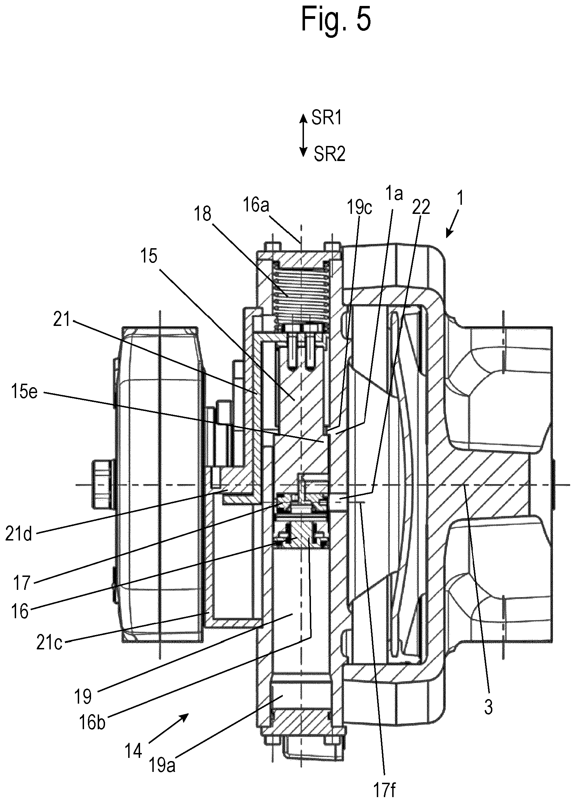

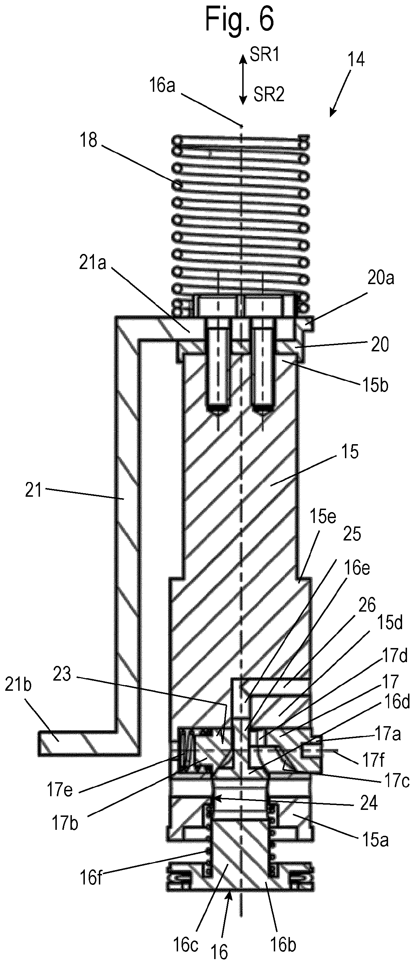

**Figur 2** stellt eine schematische Schnittansicht der Arretierungsvorrichtung 10 längs Schnittlinie II-II des Ausführungsbeispiels nach Figur 1 in einer eingebremsten Stellung des erfindungsgemäßen Bremszylinders 1 dar. **Figur 3** zeigt eine orthogonale schematische Schnittansicht der Arretierungsvorrichtung 10 nach Figur 2. **Figur 4** ist die Schnittansicht der Arretierungsvorrichtung 10 nach Figur 3 in einer notgelösten Stellung des erfindungsgemäßen Bremszylinders 1. In **Figur 5** ist die Schnittansicht der Arretierungsvorrichtung 10 nach Figur 3 in einer wiederbereiten Stellung des erfindungsgemäßen Bremszylinders 1 gezeigt. **Figur 6** zeigt eine vergrößerte Ansicht einer Betätigungseinrichtung 14 der Arretierungsvorrichtung 10 nach Figur 2 bis 5.

**Figur 2** zeigt den Bremszylinder 1 mit der Arretierungsvorrichtung 10. Die Arretierungsvorrichtung 10 ist als mechanische Bremskraftverriegelung ausgebildet und weist eine Betätigungseinrichtung 14 auf.

Die Arretierungsvorrichtung 10 weist eine Arretierungsstellung (Figur 2 und 3), und eine gelöste Stellung (Figur 5) auf.

Die Betätigungseinrichtung 14 weist eine Grundposition (Figur 2 und 3), eine Löseposition (Figur 5) und eine Notlöseposition (Figur 4) auf.

In der Grundposition der Betätigungseinrichtung 14 ist diese unbetätigt. Die Arretierungsvorrichtung 10 befindet sich in der Arretierungsstellung.

Durch Beaufschlagung mit Steuerdruck wird die Betätigungseinrichtung 14 aus der Grundposition in die Löseposition verstellt. Dabei nimmt die Arretierungsvorrichtung 10 ihre gelöste Stellung ein. Wird der Steuerdruck entfernt, verstellt sich die Betätigungseinrichtung 14 wieder in ihre Grundposition, wobei die Arretierungsvorrichtung 10 wieder in ihre Arretierungsstellung zurück gestellt wird.

Für einen Notlösevorgang bei nicht vorhandenem Steuerdruck wird die Betätigungseinrichtung 14 manuell aus der Grundposition in die Löseposition gebracht, und in dieser automatisch verriegelt, wodurch die Notlöseposition der Betätigungseinrichtung 14 hergestellt ist. Gleichzeitig wird die Arretierungsvorrichtung 10 gelöst und steht dann in ihrer gelösten Stellung, die dann als notgelöste Stellung bezeichnet wird, und welche die Arretierungsvorrichtung 10 beibehält.

Wird nun die Betätigungseinrichtung 14 in ihrer Notlöseposition mit Steuerdruck beaufschlagt, so wird die Verriegelung der Notlöseposition aufgehoben, wodurch die Löseposition wieder hergestellt ist. Die Arretierungsvorrichtung 10 verbleibt bei diesem Wechsel weiterhin in ihrer gelösten Stellung, lediglich die Bezeichnung "notgelöst" ändert sich in "gelöst". Erst wenn der Steuerdruck der Betätigungseinrichtung 14 abgesenkt wird, werden die Betätigungseinrichtung 14 in die Grundposition und die Arretierungsvorrichtung 10 in die Arretierungsstellung zurückgestellt.

Wenn die Beaufschlagung der Betätigungseinrichtung 14 mit dem Steuerdruck in der Löseposition beendet wird, wird die Betätigungseinrichtung 14 durch ein zuvor bei Einnahme der Löseposition gespanntes Kraftspeicherelement 18 wieder in die Grundposition zurück verstellt.

Figur 2 und 3 zeigen die Arretierungsstellung der Arretierungsvorrichtung 10, und Figur 5 zeigt die gelöste Stellung der Arretierungsvorrichtung 10.

Die Betätigungseinrichtung 14 kann auch als mechanische Löseeinrichtung bezeichnet werden, mittels welcher die Arretierungsvorrichtung 10 aus der Arretierungsstellung in die notgelöste Stellung (Figur 4) und aus der notgelösten Stellung in eine wiederbereite Stellung verstellbar ist. Die wiederbereite Stellung entspricht der gelösten Stellung (Figur 5).

Die Notlöseposition der Betätigungseinrichtung 14 wird beim Erreichen dieser Notlöseposition durch ein Verriegelungselement 17 automatisch verriegelt.

Bei der Verstellung der Betätigungseinrichtung 14 aus der notgelösten Stellung in die wiederbereite Stellung entriegelt der Steuerkolben 16 das Verriegelungselement 17, wenn die Betätigungseinrichtung 14 mit einem Steuerdruck beaufschlagt wird.

Solange dann die Betätigungseinrichtung 14 mit dem Steuerdruck beaufschlagt ist, verbleibt die Arretierungsvorrichtung 10 in der wieder bereiten bzw. gelösten Stellung.

Wird die Beaufschlagung der Betätigungseinrichtung 14 mit dem Steuerdruck in der Löseposition beendet, so wird dadurch die Arretierungsvorrichtung 10 aus der gelösten Stellung in die Arretierungsstellung zurück verstellt.

Die Arretierungsvorrichtung 10 umfasst in diesem Ausführungsbeispiel den Gewindeabschnitt 6 des Kolbenrohres 5, die Gewindemutter 7, zwei Sperrklinken 11, 12 und eine Betätigungseinrichtung 14.

Die Betätigungseinrichtung 14 weist ein Notlöseorgan in Form eines Notlösekeils 15, der auch als Ziehkeil bezeichnet wird, einen Steuerkolben 16, ein Verriegelungselement 17 und ein Kraftspeicherelement 18 auf. Zudem ist die Betätigungseinrichtung 14 hier mit einer Anbindung 21 für eine manuelle Betätigung versehen. Diese manuelle Betätigung kann beispielsweise mittels eines Bowdenzugs realisiert sein.

Die Sperrklinken 11, 12 bilden hier in Bezug auf die Kolbenachse 3, zu welcher die Gewindemutter 7 koaxial angeordnet ist, gegenüberliegend angeordnete Arretierelemente, wirken mit der Verzahnung 8 der Gewindemutter 7 zusammen und werden durch den Notlösekeil 15 der Betätigungseinrichtung 14 betätigt. Der Notlösekeil 15 betätigt dabei beide Sperrklinken 11, 12 gleichzeitig.

Das Verriegelungselement 17 verriegelt den Notlösekeil 15 in der Notlöseposition der Betätigungseinrichtung 14 (siehe Figur 4) an dem ortsfesten Gehäuse 1a. Das Verriegelungselement 17 wird bei Druckbeaufschlagung der Betätigungseinrichtung 14 durch den Steuerkolben 16 zur Beendigung der notgelösten Stellung und Einnehmen der wiederbereiten bzw. gelösten Stellung entriegelt.

Der Steuerkolben 16 deaktiviert auf diese Weise die Arretierungsvorrichtung 10 aus der notgelösten Stellung (Figur 4) in die wiederbereite bzw. gelöste Stellung (Figur 5).

In der Arretierungsstellung (Figur 2) der Arretierungsvorrichtung 10 blockieren die Sperrklinken 11, 12 durch einen Eingriff mit der Verzahnung 8 der Gewindemutter 7 deren Verdrehung um die Kolbenachse 3, während die Sperrklinken 11, 12 in dem Lösezustand außer Eingriff mit der Verzahnung 8 der Gewindemutter 7 stehen und diese in ihrer Verdrehung nicht blockiert ist.

Die Sperrklinken 11, 12 sind als Winkelhebel mit jeweils zwei Hebelarmen 11a, 11c; 12a, 12c ausgebildet und jeweils um eine Schwenkachse 11e, 12e verschwenkbar im Gehäuse 1a angeordnet. Die Schwenkachsen 11e, 12e verlaufen parallel zueinander und parallel zu der Kolbenachse 3.

Die Sperrklinken 11, 12 umfassen jeweils einen ersten Hebelarm 11a, 12a mit einem Antriebsende 11b, 12b und einen zweiten Hebelarm 11c, 12c mit einem Klinkenende 11d, 12d. Die Klinkenenden 11d, 12d wirken jeweils gegenüberliegend mit Zähnen der Verzahnung 8 der Gewindemutter 7 zusammen dergestalt zusammen, dass sie in der Arretierungsstellung der Arretierungsvorrichtung 10 mit den zugehörigen Zähnen einen Formschluss wie z.B. bei einem Gesperre bilden. Die Gewindemutter 7 ist dabei mit ihrer Verzahnung 8 ein verzahntes Sperrrad, und die Klinkenenden 11d, 12d der Sperrklinken 11, 12 die jeweiligen Klinken eines solchen Gesperres.

In der Arretierungsstellung der Arretierungsvorrichtung 10 sind die Sperrklinken 11, 12 jeweils mittels einer Feder 11f, 12f in Eingriff mit der Verzahnung 8 der Gewindemutter 7 gedrückt. Die Federn 11f, 12f sind jeweils Druckfedern und in einem Federhalter in dem Gehäuse 1a gehalten und stehen jeweils mit dem Klinkenende 11d, 12d der Sperrklinken 11, 12 in Kontakt.

Die Antriebsenden 11b, 12b der ersten Hebelarme 11a, 12a der Sperrklinken 11, 12 sind hier mit einer Rolle 13 ausgerüstet. Dabei kann jedes Antriebsende 11b, 12b eine Rolle 13 aufweisen, oder die Rolle 13 ist beiden Antriebsenden 11b, 12b gemeinsam zugeordnet. Eine Drehachse der Rolle(n) 13 verläuft parallel zu der Kolbenachse 3. Es ist auch denkbar, dass das Antriebsende 11b, 12b auf dem Keil gleitet.

Der Notlösekeil 15 weist einen unteren Endabschnitt 15a, der auch als erster Endabschnitt 15a bezeichnet wird, und einen oberen Endabschnitt 15b, der auch zweiter Endabschnitt 15b genannt wird. In dem ersten Endabschnitt 15a sind der Steuerkolben 16 und das Verriegelungselement 17 angeordnet. Zwischen dem ersten Endabschnitt 15a und dem zweiten Endabschnitt 15b ist eine in Längsrichtung des Notlösekeils 15 und zu den Sperrklinken 11, 12 weisende schräge Steuerfläche 15c eingeformt. Die Steuerfläche 15c verjüngt sich von dem unteren Endabschnitt 15a des Notlösekeils 15 bis zum oberen Endabschnitt 15b des Notlösekeils 15. Die Sperrklinken 11, 12 stehen über die Rolle(n) 13 mit der schrägen Steuerfläche 15c des Notlösekeils 15 in Kontakt.

Der Notlösekeil 15 ist durch die schräge Steuerfläche 15c mit einer Kraftübersetzung ausgebildet.

An dem oberen Endabschnitt 15b des Notlösekeils 15 sind ein Zwischenteil 20 und die Anbindung 21 mit einem Befestigungsabschnitt 21a mittels Schrauben oder anderen Befestigungselementen angebracht. Das Zwischenteil 20 steht mit dem unteren Ende des Kraftspeicherelementes 18, das hier als eine Spiraldruckfeder ausgebildet ist, in Kontakt und weist einen Kragen 20a auf, welcher in Zusammenwirkung mit einer umlaufenden Schulter 19c in dem Führungskanal 19 einen Anschlag für die Betätigungseinrichtung 14 bildet. Durch diesen Anschlag ist die Arretierungsstellung der Arretierungsvorrichtung 10 festgelegt. In der Arretierungsstellung ist/sind die Rolle/n 13 in einem oberen Endbereich der Steuerfläche 15c des Notlösekeils 15 angeordnet. In der (nicht gezeigten) gelösten Stellung der Arretierungsvorrichtung 10 sind ist/sind die Rolle/n in einem unteren Endbereich der Steuerfläche 15c des Notlösekeils 15 abgewälzt, da sich der Notlösekeil 15 nach oben bewegt hat, wenn die Betätigungseinrichtung 14 aus der Grundposition in die Löseposition verstellt ist.

In dieser Ausführung sind der Steuerkolben 16, der Notlösekeil 15 und das Kraftspeicherelement 18 hintereinander, konzentrisch zueinander und in Bezug auf eine gemeinsame Steuerachse 16a in einem Führungskanal 19 in dem Gehäuse 1a axial verschiebbar in Richtung der Steuerachse 16a geführt angeordnet.

Der Führungskanal 19 weist ein unteres Ende mit einem Steuerraum 19a und erstreckt sich in dem Gehäuse 1a durch einen rohrförmigen Abschnitt, der an seinem oberen Ende durch einen nicht bezeichneten Deckel verschlossen ist. Auch der Steuerraum 19a ist durch einen nicht bezeichneten Deckel zur Atmosphäre hin druckdicht verschlossen. Der Steuerraum 19a kommuniziert mit einem nicht gezeigten Steuerdruckanschluss.

Der Steuerraum 19a erstreckt sich zwischen dem unteren Ende des Führungskanals 19 und der oberen Stellung des Steuerkolbens16.

In dem Steuerraum 19a sind der Notlösekeil 15 und der Steuerkolben 16 angeordnet. Der Steuerkolben 16 ist in dem unteren Endabschnitt 15a des Notlösekeils 15 in seiner Längsrichtung und der Richtung der Steuerachse 16a in einer ersten Steuerrichtung SR1 nach oben und in einer zweiten Steuerrichtung SR2 nach unten verschiebbar geführt angeordnet. Der Steuerkolben 16 wird unten weiter noch näher beschrieben.

Zwischen dem umlaufenden Kragen 19c und dem oberen Ende mit dem Deckel ist ein Federraum 19b gebildet, in welchem das Kraftspeicherelement 18 angeordnet ist, das sich mit einem unteren Ende an dem Zwischenteil 20 und mit einem oberen Ende an dem oberen Deckel abstützt.

Das Zwischenteil 20 bewegt sich mit dem Notlösekeil 15 und dem Kraftspeicherelement 18 in dem Federraum 19b in der ersten Steuerrichtung SR1 nach oben beim Einnehmen der Löseposition und in der zweiten Steuerrichtung SR2 nach unten beim Einnehmen der Grundposition. In der Arretierungsstellung, d.h. in der Grundposition der Betätigungseinrichtung 14, liegt der Kragen 20a des Zwischenteils 20 auf der umlaufenden Schulter 19c des Führungskanals 19 auf und bildet den Anschlag, welcher die Grundposition Betätigungseinrichtung 14 festlegt, in der zweiten Steuerrichtung SR2.

In der zu Figur 2 orthogonalen schematischen Schnittansicht der Arretierungsvorrichtung 10 nach Figur 2 sind in **Figur 3** die Anordnungen von Verriegelungselement 17 und Anbindung 21 und dieselbe erkennbar.

Das Verriegelungselement 17 ist in dem unteren Endabschnitt 15a des Notlösekeils 15 in seiner Längsachse 17f, die parallel zu der Kolbenachse 3 verläuft, verschiebbar geführt aufgenommen. Eine detailliertere Beschreibung ist unten angegeben.

Die Anbindung 21 ist hier Z-förmig gestaltet und weist den Befestigungsabschnitt 21a und einen parallel sich in gegengesetzte Richtung erstreckenden Endabschnitt 21b auf. Der Befestigungsabschnitt 21a und der Endabschnitt 21b sind über einen geraden Mittelabschnitt verbunden. Die Anbindung 21 kann z.B. aus einem metallischen Flachmaterial als Stanzbiegeteil gebildet sein. Mittels der Anbindung 21 ist ein manuelles Notlösen der Arretierungsvorrichtung 10 über die Betätigungseinrichtung 14 möglich. Mit anderen Worten, auf diese Weise kann der Notlösekeil 15 mittels der Anbindung 21 in der ersten Steuerrichtung SR1 nach oben in die in Figur 4 gezeigte Notlöseposition verstellt werden.

Der Endabschnitt 21b der Anbindung 21 ist in einer Abdeckung 21c angeordnet. Ein oberer Anschlag 21d wirkt mit dem Endabschnitt 21b dergestalt zusammen, dass damit eine Festlegung der Notlöseposition gebildet werden kann. Diese Notlöseposition der Betätigungseinrichtung 14 zeigt **Figur 4****.** Es ist anzumerken, dass die Notlöseposition der Betätigungseinrichtung 14 auch der Löseposition der Betätigungseinrichtung 14 entspricht. Das Unterscheidungsmerkmal dieser Positionen liegt darin, dass in der Notlöseposition das Verriegelungselement 17 in Eingriff mit einer Halteaufnahme 22 des Gehäuses 1a steht.

Im Fall einer solchen manuellen Notlösung ist der Notlösekeil 15 soweit nach oben in Steuerrichtung SR1 verstellt, dass eine Schulter 15e des Notlösekeils 15 in Kontakt mit der Unterseite der umlaufenden Schulter 19c des Führungskanals 19 kommt. Auf diese Weise ist die Notlöseposition der Betätigungseinrichtung 14 festgelegt. In dieser Notlöseposition steht das Verriegelungselement 17 direkt von der Halteaufnahme 22 des Gehäuses 1a, wobei eine Längsachse 17f des Verriegelungselementes 17 mit einer Mittelachse einer Bohrung der Halteaufnahme 22 fluchtet.

Das Kraftspeicherelement 18 ist in der Notlöseposition, und somit auch in der Löseposition, komprimiert. Das Zwischenteil 20 ist mit dem Befestigungsabschnitt 21 a der Anbindung 21 und dem oberen Endabschnitt 15 und einem weiteren Abschnitt des Notlösekeils 15 in den Aufnahmeraum 19b verstellt.

In dieser Notlöseposition fällt das Verriegelungselement 17 automatisch in die Bohrung der Halteaufnahme 22 im Gehäuse 1a ein, wodurch die Notlöseposition der Betätigungseinrichtung 14 und somit die Lösestellung der Arretierungsvorrichtung 10 verriegelt werden. Dabei wird das Verriegelungselement 17 durch eine Feder 17e (in Figur 6 deutlich erkennbar) in Richtung seiner Längsachse 17f in die Halteaufnahme 22 gedrückt. Die Feder 17e beaufschlagt das Verriegelungselement 17 ständig mit einer Axialkraft. Daher wird das Verriegelungselement 17 in der Grundposition (Figur 3) nach außen gegen die Innenwandung des Führungskanals 19 gedrückt und kann bei Einnahme der Notlöseposition (Figur 4), wenn das Führungselement 17 und die Halteaufnahme 22 fluchten, in die Halteaufnahme 22 automatisch eingreifen.

Wird nun in der Notlöseposition der Betätigungseinrichtung 14 der Steuerkolben 16 mit einem Steuerdruck beaufschlagt, bewegt sich der Steuerkolben 16 in dem unteren Endabschnitt 15d des Notlösekeils 15 (siehe auch Figur 6) relativ zu dem stillstehenden Notlösekeil 15 nach oben in Richtung der ersten Steuerrichtung SR1 und verstellt das Verriegelungselement 17 über eine Konusfläche 16d des Steuerkolbens 16 derart gegen die Kraft der Feder 17e, dass das Verriegelungselement 17 außer Eingriff mit der Halteaufnahme 22 des Gehäuses 1a kommt und wieder vollständig in den Notlösekeil 15 zurückgezogen wird. Dadurch wird die Notlöseposition in die Löseposition zurückgesetzt und die wiederbereite Stellung, also die Lösestellung, der Arretierungsvorrichtung 10 eingenommen. Diese Ausführung ist besonders kompakt, da das Verriegelungselement 17 im Notlösekeil 15 angeordnet ist. Es ist jedoch auch denkbar, dass das Verriegelungselement 17 im Gehäuse 1a angeordnet ist.

Dies ist in **Figur 5** dargestellt. Der Steuerkolben 16 ist weiterhin mittels des Steuerdrucks in dem Steuerraum 19a (zwischen dem unteren Deckel und dem Steuerkolben 16 und einem Druckabschnitt 16b des Steuerkolbens 16) nach oben in die erste Steuerrichtung SR1 verstellt. Dabei ist das Verriegelungselement 17 durch die Konusfläche 16d wieder in den Endabschnitt 15a des Notlösekeils 15 eingeschoben. Die Einzelheiten hierzu von Verriegelungselement 17 und Steuerkolben 16 sind in der **Figur 6** vergrößert verdeutlicht.

Die Betätigungseinrichtung 14 umfasst den Notlösekeil 15, den Steuerkolben 16, das Verriegelungselement 17 und das Kraftspeicherelement 18. Auch die Anbindung 21 zur manuellen Betätigung gehört hier dazu.

Der Steuerkolben 16 als Steuerorgan und der ohnehin mit einer Übersetzung versehene Notlösekeil 15 sind derart hintereinander angeordnet und gekoppelt, dass der Steuerkolben 16 bei Beaufschlagung mit Steuerdruck in der Arretierungsstellung der Arretierungsvorrichtung 10 auf den Notlösekeil 15 einwirkt und diesen in der ersten Steuerrichtung SR1 bis in die gelöste Stellung gegen die Kraft des Kraftspeicherelementes 18 verstellt. Auf diese Weise werden die Sperrklinken 11, 12 der Arretierungsvorrichtung 10 mit einer Kraftübersetzung deaktiviert.

Wenn die Arretierungsstellung der Arretierungsvorrichtung 10 manuell über die Anbindung 21 gelöst wird und kein Steuerdruck vorhanden ist, wird die manuelle Verstellkraft über die Anbindung 21 auf den Notlösekeil 15 direkt übertragen und verstellt diesen in die notgelöste Stellung. Dabei wird der Steuerkolben 16 mit verstellt, da er mit dem Notlösekeil 15 gekoppelt ist. Diese Kopplung wird unten weiter noch beschrieben.

Wenn die notgelöste Stellung durch Beaufschlagen der Betätigungseinrichtung 14 mit Steuerdruck in die wiederbereite Stellung verstellt wird, wirkt der Steuerkolben 16 als Steuerorgan auf das mit einer Übersetzung versehene Verriegelungselement 17. Dadurch ist gewährleistet, dass der Steuerkolben 16 das Verriegelungselement 17 mit einer Kraftübersetzung deaktiviert.

Der Steuerkolben 16 umfasst den Druckabschnitt 16b, der mit einem zentralen zylindrischen Körper 16c verbunden ist. Weiterhin ist der Druckabschnitt 16b umlaufend mit einer nicht bezeichneten Dichtung versehen, welche den Steuerraum 19a in Abhängigkeit von der Stellung des Steuerkolbens 16 in zwei Bereiche trennt und abdichtet. So wird der Bereich des Steuerraums 19a zwischen dem unteren Deckel und dem Druckabschnitt 16b des Steuerkolbens 16 mit dem Steuerdruck beaufschlagt, wohingegen der andere Bereich davon durch die Dichtung des Druckabschnitts 16b des Steuerkolbens 16 abgetrennt ist.

Der zentrale zylindrische Körper 16c erstreckt sich durch eine Bohrung 24 des unteren Endabschnitts 15a des Notlösekeils 15. An dem oberen Ende des zentralen zylindrischen Körpers 16c ist die Konusfläche 16d angeformt. Die Konusfläche 16d steht in Eingriff mit einem inneren Konusabschnitt 17c des Verriegelungselementes 17, wie unten noch näher erläutert wird.

An der Konusfläche 16d des Steuerkolbens 16 ist ein zylindrischer Führungsabschnitt 16e angebracht. Der zylindrische Führungsabschnitt 16e erstreckt sich durch ein Langloch 17d des Führungselementes 17 in eine Führungsbohrung 25 eines Aufnahmeabschnitts 15d des Notlösekeils 15 hinein. Der zylindrische Führungsabschnitt 16e ist in der Führungsbohrung 25 in Richtung der Steuerachse 16a, zu welcher die Führungsbohrung 25 konzentrisch ist, verschiebbar geführt. Die Führungsbohrung 25 ist an ihrem oberen Ende mit einem rechtwinklig dazu angeordneten Kanal 26 zwecks Entlüftung verbunden. Der Kanal 26 mündet an der Außenseite des Notlösekeils 15.

Das Verriegelungselement 17 ist in einer Führungsaufnahme 23 verschiebbar geführt angeordnet. Die Führungsaufnahme 23 verläuft hier parallel zu der Kolbenachse 3. Die Führungsaufnahme 23 ist hier in Form einer Stufenbohrung in den Notlösekeil 15 eingeformt und erstreckt sich quer zu der Steuerachse 16a durch den Aufnahmeabschnitt 15d des Notlösekeils 15.

An der Seite, die zu der Abdeckung 21d weist, ist die Führungsaufnahme 23 mit einer Öffnung versehen, deren Querschnitt kleiner ist als ein Querschnitt der Führungsaufnahme 23, und zu der gegenüberliegenden Seite offen.

Das Verriegelungselement 17 ist hier als eine Art zylindrischer Bolzen mit einem Halteabschnitt 17a, einem Endabschnitt 17b, dem Konusabschnitt 17c, dem Langloch 17d und einer Längsachse 17f ausgebildet. Der Halteabschnitt 17a dient zum Eingriff mit der Halteaufnahme 22 des Gehäuses 1a (siehe Figur 4) in der notgelösten Stellung. Der Endabschnitt 17b steht mit einem Ende der Feder 17e in Kontakt, deren anderes Ende sich an dem Boden der Führungsaufnahme 23, welcher die kleinere Öffnung aufweist, abstützt. Auf diese Weise ist das Verriegelungselement 17 in Richtung seiner Längsachse 17f auf das Gehäuse 1a vorgespannt.

Der Konusabschnitt 17c ist in die Unterseite des Verriegelungselementes 17 eingeformt und steht mit der Konusfläche 16d des Steuerkolbens 16 in Kontakt. Das Langloch 17d ist an der der Konusfläche 16d gegenüberliegenden oberen Seite des Verriegelungselementes 17 eingeformt. Die Längsachse des Langlochs 17d verläuft parallel zu der Längsachse 17f des Verriegelungselementes 17 und ermöglicht eine begrenzte Verstellung des Verriegelungselementes 17 in Richtung seiner Längsachse 17f.

Der Steuerkolben 16 ist mittels des zylindrischen Körpers 16c in dem unteren Endabschnitt 15a des Notlösekeils 15 in der Bohrung 24 und mittels des zylindrischen Führungsabschnitts 16e in der Führungsbohrung 25 in dem Aufnahmeabschnitt 15d des Notlösekeils 15 verschiebbar geführt und durch eine Feder 16f axial in die zweite Steuerrichtung SR2 wirkend vorgespannt. Zudem ist der Steuerkolben 16 in nicht gezeigter Weise mittels einer Axialsicherung axial in dem Notlösekeil 15 gehalten und auf diese Weise mit dem Notlösekeil 15 gekoppelt. Die Feder 16f ist zwischen dem Druckabschnitt 16b des Steuerkolbens 16 und dem unteren Endabschnitt 15a des Notlösekeils 15 angeordnet.

Die Axialsicherung des Steuerkolbens 16 in Bezug auf den Notlösekeil 15 begrenzt eine Axialbewegung des Steuerkolbens 16 in der zweiten Steuerrichtung SR2. Der Sitz einer solchen Axialsicherung am Steuerkolben 16 ist durch eine breite Nut unterhalb der Konusfläche 16d des Steuerkolbens 16 angedeutet, welche mit einem quer verlaufenden Durchgangsloch in dem ersten Endabschnitt 15a des Notlösekeils 15 fluchtet. Damit kann der Steuerkolben 16 Axialbewegungen in Richtung der Steuerachse 16a ausführen, die einerseits in der ersten Steuerrichtung SR1 durch Anschlag in dem Konusabschnitt 17c des Verriegelungselementes 17 an dem Verriegelungselement 17 und andererseits in der zweiten Steuerrichtung SR2 durch die nicht gezeigte Axialsicherung in dem quer verlaufenden Durchgangsloch in dem ersten Endabschnitt 15a des Notlösekeils 15 am Notlösekeil 15 begrenzt sind.

Wenn der Steuerkolben 16 durch Druckbeaufschlagung in die erste Steuerrichtung SR1 gegen die Kraft der Feder 16f verstellt wird, wird seine Längsbewegung in der ersten Steuerrichtung SR1 durch den Kontakt zwischen der Konusfläche 16d und dem inneren Konusabschnitt 17c in eine dazu rechtwinklige Längsbewegung des Verriegelungselementes 17 gegen die Kraft der Feder 17e, die auf das Verriegelungselement 17 axial einwirkt, umgesetzt. Dabei wird das Verriegelungselement 17 in die Führungsaufnahme 23 eingezogen, wie im Zusammenhang mit der Figur 5 oben beschrieben ist.

Alternativ kann es möglich sein, dass das Verriegelungselement 17 in dem Gehäuse 1a angeordnet und in Richtung auf den Führungskanal 19 durch eine Feder vorgespannt ist. In der notgelösten Stellung würde das Verriegelungselement 17 dann automatisch in eine Aufnahme in dem Notlösekeil 15 eingedrückt werden. Dies kann z.B. die Führungsaufnahme 23 sein. Der Steuerkolben 16 ist dann derart ausgebildet, dass er bei Beaufschlagung mit Steuerdruck wie oben beschrieben in der ersten Steuerrichtung SR1 verstellt wird und dabei mit einem Betätigungsabschnitt, der z.B. auch konisch ausgebildet ist, in die Führungsaufnahme 23 eingeschoben wird, und das Verriegelungselement 17 wieder aus der Führungsaufnahme 23 in das Gehäuse 1a zurückschiebt. Dies ist nicht gezeigt, aber leicht vorstellbar.

Wenn die Betätigungseinrichtung 14 in der Grundposition mit Steuerdruck beaufschlagt wird, bewegt sich zunächst der Steuerkolben 16 in den unteren Endabschnitt 15a des Notlösekeils 15 hinein. Die Konusfläche 16d des Steuerkolbens 16 bewegt sich in dem Konusabschnitt 17c des Verriegelungselementes 17 nach oben und kommt erst jetzt in Kontakt mit dem Konusabschnitt 17c, da das Verriegelungselement 17 durch die Innenwand des Führungskanals 19 (siehe Figur 3) in der Führungsaufnahme 23 gehalten ist. Aufgrund der eingeschobenen Position des Steuerkolbens 16 hält nun dessen Konusfläche 16d in Eingriff mit dem Konusabschnitt 17c das Verriegelungselement 17 in der Führungsaufnahme 23 zurück.

Der Steuerdruck bewirkt nun über den in den Notlösekeil 15 eingeschobenen Steuerkolben 16 eine Verschiebung des Notlösekeils 15 in der ersten Steuerrichtung SR1 bis in die Löseposition. Dabei wird das Kraftspeicherelement 18 gespannt.

In der Löseposition erfolgt unter der weiteren Beaufschlagung mit dem Steuerdruck, der den Notlösekeil 15 und den Steuerkolben 16 in dieser Löseposition hält, keine automatische Verriegelung mit dem Verriegelungselement 17, da dieses durch den Steuerkolben 16, d.h. durch dessen Konusfläche 16d in Eingriff mit dem Konusabschnitt 17c des Verriegelungselementes 17, in der Führungsaufnahme 23 zurückgehalten wird.

Der Steuerkolben 16, das Verriegelungselement 17 mit der Feder 17e und dem Kraftspeicherelement 18 sind in ihren Dimensionierungen derart aufeinander abgestimmt, dass die erforderliche Druckkraft des Steuerkolbens 16 zum Entriegeln des Verriegelungselements 17 geringer ist als die zum Verschieben der Betätigungseinrichtung 14 in Lösestellung erforderliche Kraft. Dies kann z.B. durch eine entsprechende Auslegung der Federkräfte des Kraftspeicherelementes 18 und der Feder 17e erreicht werden, wobei die Federkraft der Feder 17e geringer ist als die Federkraft des Kraftspeicherelementes 18. Weitere Faktoren dazu sind der Kegelwinkel der Konusfläche 16d des Steuerkolbens 16 und des Konusabschnitts 17c des Verriegelungselementes 17.

Die Erfindung ist durch das oben angegebene Ausführungsbeispiel nicht eingeschränkt, sondern im Rahmen der Ansprüche modifizierbar.

So ist es z.B. denkbar, dass das Verriegelungselement 17 keinen kreisförmigen Querschnitt sondern einen davon abweichenden Querschnitt besitzt.

### Bezugszeichenliste

- 1: Bremszylinder
- 1a: Gehäuse
- 2: Betriebsbremskolben
- 3: Kolbenachse
- 4: Bewegungsrichtung
- 5: Kolbenrohr
- 6: Gewindeabschnitt
- 7: Gewindemutter
- 8: Verzahnung
- 9: Gewinde
- 10: Arretierungsvorrichtung
- 11, 12: Sperrklinke
- 11a, 12a: Hebelarm
- 11b, 12b: Antriebsende
- 11c, 12c: Hebelarm
- 11d, 12d: Klinkenende
- 11e, 12e: Schwenkachse
- 11f, 12f: Feder
- 13: Rolle
- 14: Betätigungseinrichtung
- 15: Notlösekeil
- 15a, 15b: Endabschnitt
- 15c: Steuerfläche
- 15d: Aufnahmeabschnitt
- 15e: Schulter
- 16: Steuerkolben
- 16a: Steuerachse
- 16b: Druckabschnitt
- 16c: Körper
- 16d: Konusfläche
- 16e: Führungsabschnitt
- 16f: Feder
- 17: Verriegelungselement
- 17a: Halteabschnitt
- 17b: Endabschnitt
- 17c: Konusabschnitt
- 17d: Langloch
- 17e: Feder
- 17f: Längsachse
- 18: Kraftspeicherelement
- 19: Führungskanal
- 19a: Steuerraum
- 19b: Federraum
- 19c: Schulter
- 20: Zwischenteil
- 20a: Kragen
- 21: Anbindung
- 21a: Befestigungsabschnitt
- 21b: Endabschnitt
- 21c: Abdeckung
- 21d: Anschlag
- 22: Halteaufnahme
- 23: Führungsaufnahme
- 24: Bohrung
- 25: Führungsbohrung
- 26: Kanal

- DA: Druckanschluss
- DR: Druckraum
- SR1, SR2: Steuerrichtung

## Patentansprüche

1. Bremszylinder (1) mit einer Arretierungsvorrichtung (10) zur mechanischen Bremskraftverriegelung, insbesondere für Schienenfahrzeuge, und mit einem innerhalb eines Gehäuses (1a) axial bewegbaren Betriebsbremskolben (2), der durch Beaufschlagung mit einem Druckmedium bewegbar und mit einem Kolbenrohr (5) im Eingriff ist, wobei das Kolbenrohr (5) mit einem nicht selbsthemmenden Gewinde (9), das in Eingriff mit einer in dem Gehäuse (1) drehbar gelagerten Gewindemutter (7) steht, ausgebildet ist, wobei die Arretierungsvorrichtung (10) mit einer Verzahnung (8) der Gewindemutter (7) zusammenwirkt, wobei die Arretierungsvorrichtung (10) eine oder mehrere Sperrklinke/n (11, 12), einen Steuerkolben (16), ein Notlöseorgan und ein Verriegelungselement (17) des Notlöseorgans aufweist,
**dadurch gekennzeichnet, dass**
die Arretierungsvorrichtung (10) eine Betätigungseinrichtung (14) aufweist, welche den Steuerkolben (16), das Notlöseorgan in Gestalt eines Notlösekeils (15), mindestens ein Verriegelungselement (17), mindestens ein Kraftspeicherelement (18) und eine Anbindung (21) zum manuellen Lösen umfasst.

2. Bremszylinder (1) nach Anspruch 1, **dadurch gekennzeichnet, dass** der Steuerkolben (16), der Notlösekeil (15) und das mindestens eine Kraftspeicherelement (18) hintereinander, konzentrisch zueinander und in Bezug auf eine gemeinsame Steuerachse (16a) angeordnet sind.

3. Bremszylinder (1) nach Anspruch 2, **dadurch gekennzeichnet, dass** der Steuerkolben (16), der Notlösekeil (15) und das mindestens eine Kraftspeicherelement (18) in einem Führungskanal (19) in dem Gehäuse (1a) axial verschiebbar in Richtung der Steuerachse (16a) geführt angeordnet sind.

4. Bremszylinder (1) nach einem der vorhergehenden Ansprüche, **dadurch gekennzeichnet, dass** der Steuerkolben (16) mit dem Notlösekeil (15) gekoppelt ist.

5. Bremszylinder (1), nach Anspruch 4, **dadurch gekennzeichnet, dass** der Steuerkolben (16) in einer ersten Steuerrichtung (SR1) relativ zu dem Notlösekeil (15) und in einer zweiten zu der ersten Steuerrichtung (SR1) entgegengesetzten Steuerrichtung (SR2) zumindest teilweise in einem ersten Endabschnitt (15a) des Notlösekeils (15) in dessen Längsrichtung und der Richtung der Steuerachse (16a) verschiebbar geführt angeordnet ist.

6. Bremszylinder (1) nach Anspruch 4 oder 5, **dadurch gekennzeichnet, dass** der Steuerkolben (16) in dem unteren Endabschnitt (15a) des Notlösekeils (15) verschiebbar geführt und durch eine Feder (16f) axial in die zweite Steuerrichtung (SR2) wirkend vorgespannt ist, wobei der Steuerkolben (16) in mittels einer Axialsicherung axial in dem Notlösekeil (15) gehalten und auf diese Weise mit dem Notlösekeil (15) gekoppelt ist.

7. Bremszylinder (1) nach einem der vorhergehenden Ansprüche, **dadurch gekennzeichnet, dass** das Verriegelungselement (17) verschiebbar geführt angeordnet und durch eine Feder (17e) in Richtung seiner Längsachse (17f) vorgespannt ist.

8. Bremszylinder (1) nach Anspruch 7, **dadurch gekennzeichnet, dass** die Längsachse (17f) des Verriegelungselementes (17) rechtwinklig zu der Steuerachse (16a) des Steuerkolbens (16) verläuft.

9. Bremszylinder (1) nach Anspruch 7 oder 8, **dadurch gekennzeichnet, dass** das Verriegelungselement (17) in einem ersten Endabschnitt (15a) des Notlösekeils (15) in einer Führungsaufnahme (23) angeordnet ist.

10. Bremszylinder (1) nach Anspruch 7 oder 8, **dadurch gekennzeichnet, dass** das Verriegelungselement (17) in dem Gehäuse (1a) angeordnet ist.

11. Bremszylinder (1) nach einem der vorhergehenden Ansprüche, **dadurch gekennzeichnet, dass** der Steuerkolben (16) mit einer Konusfläche (16d) mit einem Konusabschnitt (17d) des Verriegelungselementes (17) in Eingriff steht.

12. Bremszylinder (1) nach einem der vorhergehenden Ansprüche, **dadurch gekennzeichnet, dass** die Arretierungsvorrichtung (10) aus einer Arretierungsstellung, in welcher die eine oder mehrere Sperrklinke/n (11, 12) durch einen Eingriff mit der Verzahnung (8) der Gewindemutter (7) deren Verdrehung um die Kolbenachse (3) blockieren, in eine gelöste Stellung, in welcher die Sperrklinken (11, 12) außer Eingriff mit der Verzahnung (8) der Gewindemutter (7) stehen und die Gewindemutter (7) in ihrer Verdrehung nicht blockieren, und mittels der Betätigungseinrichtung (14) verstellt ist, wenn die Betätigungseinrichtung (14) aus einer unbetätigten Grundposition mit Steuerdruck beaufschlagt in eine Löseposition verstellt ist.

13. Bremszylinder (1) nach einem der vorhergehenden Ansprüche, **dadurch gekennzeichnet, dass** die Arretierungsvorrichtung (10) aus der Arretierungsstellung in die gelöste Stellung als eine notgelöste Stellung verstellt ist, wenn die Betätigungseinrichtung (14) aus der unbetätigten Grundposition manuell in eine Notlöseposition verstellt ist, wobei eine Verriegelung mit dem Verriegelungselement (17) gebildet ist.

14. Bremszylinder (1) nach Anspruch 13, **dadurch gekennzeichnet, dass** das Verriegelungselement (17) in der Notlöseposition der Betätigungseinrichtung (14) den Notlösekeil (15) der Betätigungseinrichtung (14) in Bezug auf das ortsfeste Gehäuse (1a) automatisch verriegelt.

15. Bremszylinder (1) nach einem der vorhergehenden Ansprüche, **dadurch gekennzeichnet, dass** die Verriegelung der Betätigungseinrichtung (14) mit dem Verriegelungselement (17) in der Notlöseposition der Betätigungseinrichtung (14) entriegelt ist, wenn die Betätigungseinrichtung (14) in der Notlöseposition mit Steuerdruck beaufschlagt ist.

16. Bremszylinder (1) nach einem der vorhergehenden Ansprüche,
**dadurch gekennzeichnet, dass** Steuerkolben (16), Verriegelungselement (17) mit Feder (17e) und Kraftspeicherelement (18) derart aufeinander abgestimmt sind, dass die erforderliche Druckkraft des Steuerkolbens zum Entriegeln des Verriegelungselements (17) geringer ist als die zum Verschieben der Betätigungseinrichtung (14) in Lösestellung erforderliche Kraft.

## Claims

1. Brake cylinder (1) with a locking device (10) for mechanical brake force locking, in particular for rail vehicles, and with a service brake piston (2) that can move within a housing (1a), which piston can be moved by acting upon it with a pressure medium and engages with a piston tube (5), wherein the piston tube (5) is designed to engage by means of a non-self-locking thread (9) with a threaded nut (7) mounted to rotate inside the housing (1), wherein the locking device (10) co-operates with teeth (8) of the threaded nut (7), wherein the locking device (10) comprises one or more pawl(s) (11, 12), a control piston (16), an emergency release element and a locking element (17) of the emergency release element,
**characterised in that**
the locking device (10) has an actuating device (14) which comprises the control piston (16), the emergency release element designed in the form of an emergency release wedge (15), at least one locking element (17), at least one energy storage element (18) and a connection (21) for manual release.

2. Brake cylinder (1) according to Claim 1, **characterised in that** the control piston (16), the emergency release wedge (15) and the at least one energy storage element (18) are arranged one after another and concentrically with one another in relation to a common control axis (16a).

3. Brake cylinder (1) according to Claim 2, **characterised in that** the control piston (16), the emergency release wedge (15) and the at least one energy storage element (18) are arranged in a guide channel (19) in the housing (1a) and can move in an axially guided manner in the direction of the control axis (16a).

4. Brake cylinder (1) according to any of the preceding claims, **characterised in that** the control piston (16) is coupled to the emergency release wedge (15).

5. Brake cylinder (1) according to Claim 4, **characterised in that** the control piston (16) is arranged and can be guided to be displaced in a first control direction (SR1) relative to the emergency release wedge (15) and in a second control direction (SR2) opposite to the first control direction (SRI), at least partially in a first end section (15a) of the emergency release wedge (15) in its longitudinal direction and the direction of the control axis (16a).

6. Brake cylinder (1) according to Claims 4 or 5, **characterised in that** the control piston (16) is guided and can be displaced in the lower end section (15a) of the emergency release wedge (15) and is prestressed by a spring (16f) that acts axially in the second control direction (SR2), wherein the control piston (16) is held by means of an axial lock axially in the emergency release wedge (15) and in this way is coupled to the emergency release wedge (15).

7. Brake cylinder (1) according to any of the preceding claims, **characterised in that** the locking element (17) is designed to be displaceable in a guided manner and is prestressed by a spring (17e) in the direction of its longitudinal axis (17f).

8. Brake cylinder (1) according to Claim 7, **characterised in that** the longitudinal axis (17f) of the locking element (17) extends perpendicularly to the control axis (16a) of the control piston (16).

9. Brake cylinder (1) according to Claims 7 or 8, **characterised in that** the locking element (17) is arranged in a first end section (15a) of the emergency release wedge (15), in a guiding recess (23).

10. Brake cylinder (1) according to Claims 7 or 8, **characterised in that** the locking element (17) is arranged in the housing (1a).

11. Brake cylinder (1) according to any of the preceding claims, **characterised in that** the control piston (16) engages with a conical surface (16d) in a conical section (17d) of the locking element (17).

12. Brake cylinder (1) according to any of the preceding claims, **characterised in that** the locking device (10) is displaced from a locking position in which the one or more pawl(s) (11, 12) block the rotation of the threaded nut (7) by virtue of their engagement with the teeth (8) of the threaded nut (7), to a release position in which the pawls (11, 12) are disengaged from the teeth (8) of the threaded nut (7) and do not block the rotation of the threaded nut (7), and is so displaced by means of the actuating device (14) when the actuating device (14) is moved by the action of a control pressure out of an inactive basic position to a release position.

13. Brake cylinder (1) according to any of the preceding claims, **characterised in that** the locking device (10) is moved from the locking position to the release position as an emergency release position when the actuating device (14) is moved manually from the inactive basic position to an emergency release position, whereby a lock is formed with the locking element (17).

14. Brake cylinder (1) according to Claim 13, **characterised in that** in the emergency release position of the locking element (17) the actuating device (14) automatically locks the emergency release wedge (15) of the actuating device (14) relative to the positionally fixed housing (1a).

15. Brake cylinder (1) according to any of the preceding claims, **characterised in that** the locking of the actuating device (14) with the locking element (17) in the emergency release position of the actuating device (14), is released when the actuating device (14) in the emergency release position is acted upon by a control pressure.

16. Brake cylinder (1) according to any of the preceding claims, **characterised in that** the control piston (16), the locking element (17) with its spring (17e) and the energy storage element (18) are matched to one another in such manner that the pressure force of the control piston required in order to unlock the locking element (17) is smaller than the force required in order to displace the actuating device (14) to its release position.

## Revendications

1. Cylindre (1) de frein comprenant un dispositif (10) d'arrêt pour le verrouillage mécanique de la force de freinage, notamment pour des véhicules ferroviaires, et comprenant un piston (2) de frein de service, qui peut se déplacer axialement dans une enveloppe (la), qui peut se déplacer en étant soumis à un fluide sous pression et qui est en prise avec un tube (5) de piston, dans lequel le tube (5) de piston' est constitué en ayant un filetage (9) non autobloquant, qui engrène avec un écrou (7) fileté monté tournant dans l'enveloppe (1), dans lequel le dispositif (10) d'arrêt coopère avec une denture (8) de l'écrou (7) fileté, dans lequel le dispositif (10) d'arrêt a un ou plusieurs cliquets (11, 12) d'arrêt, un piston (16) de commande, un organe de desserrage d'urgence et un élément (17) de verrouillage de l'organe de desserrage d'urgence,
**caractérisé en ce que**
le dispositif (10) d'arrêt a un dispositif (14) d'actionnement, qui comprend le piston (16) de commande, l'organe de desserrage d'urgence sous la forme d'un coin (15) de desserrage d'urgence, au moins un élément (17) de verrouillage, au moins un élément (18) d'accumulation de force et une liaison (21) pour le desserrage manuel.

2. Cylindre (1) de frein suivant la revendication 1, **caractérisé en ce que** le piston (16) de commande, le coin (15) de desserrage d'urgence et le au moins un élément (18) d'accumulation de force sont disposés les uns derrière les autres concentriquement entre eux et par rapport à un axe (16a) de commande commun.

3. Cylindre (1) de frein suivant la revendication 2, **caractérisé en ce que** le piston (16) de commande, le coin (15) de desserrage d'urgence et le au moins un élément (18) d'accumulation de force sont disposés, guidés dans la direction de l'axe (16a) de commande, à coulissement axial dans un canal (19) de guidage de l'enveloppe (1a).

4. Cylindre (1) de frein suivant l'une des revendications précédentes, **caractérisé en ce que** le piston (16) de commande est accouplé au coin (15) de desserrage d'urgence.

5. Cylindre (1) de frein suivant la revendication 4, **caractérisé en ce que** le piston (16) de commande se déplace dans un premier sens (SR1) de commande par rapport au coin (15) de desserrage d'urgence et dans un deuxième sens (SR2) de commande, contraire au premier sens (SR1) de commande, au moins en partie dans un premier tronçon (15a) d'extrémité du coin (15) de desserrage d'urgence en étant guidé de manière à pouvoir coulisser dans sa direction longitudinale et dans la direction de l'axe (16a) de commande.

6. Cylindre (1) de frein suivant la revendication 4 ou 5, **caractérisé en ce que** le piston (16) de commande est guidé à coulissement dans le tronçon (15a) d'extrémité inférieur du coin (15) de desserrage d'urgence et est, par un ressort (16f), précontraint en agissant axialement dans le deuxième sens (SR2) de commande, le piston (16) de commande étant maintenu axialement dans le coin (15) de desserrage d'urgence au moyen d'une sécurité axiale et étant accouplé ainsi au coin (15) de desserrage d'urgence.

7. Cylindre (1) de frein suivant l'une des revendications précédentes, **caractérisé en ce que** l'élément (17) de verrouillage est monté en étant guidé à coulissement axial et est précontraint par un ressort (17e) dans la direction de son axe (17f) longitudinal.

8. Cylindre (1) de frein suivant la revendication 7, **caractérisé en ce que** l'axe (17f) longitudinal de l'élément (17) de verrouillage s'étend perpendiculairement à l'axe (16a) de commande du piston (16) de commande.

9. Cylindre (1) de frein suivant la revendication 7 ou 8, **caractérisé en ce que** l'élément (17) de verrouillage est disposé dans un premier tronçon (15a) d'extrémité du coin (15) de desserrage d'urgence dans un logement (23) de guidage.

10. Cylindre (1) de frein suivant la revendication 7 ou 8, **caractérisé en ce que** l'élément (17) de verrouillage est disposé dans l'enveloppe (la).

11. Cylindre (1) de frein suivant l'une des revendications précédentes, **caractérisé en ce que** le piston (16) de commande est en prise par une surface (16d) conique avec une partie (17d) conique de l'élément (17) de verrouillage.

12. Cylindre (1) de frein suivant l'une des revendications précédentes, **caractérisé en ce que** le dispositif (10) d'arrêt passe d'une position d'arrêt, dans laquelle le un ou les plusieurs cliquets (11, 12) d'arrêt bloquent, par une prise avec la denture (8) de l'écrou (7) fileté, sa rotation autour de l'axe (3) du piston, dans une position desserrée, dans laquelle les cliquets (11, 12) d'arrêt sont hors de prise avec la denture (8) de l'écrou (7) fileté et ne bloquent pas l'écrou (7) fileté dans sa rotation, et est déplacé au moyen du dispositif (14) d'actionnement, si le dispositif (14) d'actionnement passe d'une position de base non actionnée en étant soumis à la pression de commande à une position de desserrage.

13. Cylindre (1) de frein suivant l'une des revendications précédentes, **caractérisé en ce que** le dispositif (10) d'arrêt passe de la position d'arrêt à la position desserrée comme position desserrée d'urgence, si le dispositif (14) d'actionnement passe de la position de base non actionnée manuellement dans une position de desserrage d'urgence, un verrouillage étant formé par l'élément (17) de verrouillage.

14. Cylindre (1) de frein suivant la revendication 13, **caractérisé en ce que** l'élément (17) de verrouillage verrouille automatiquement, dans la position de desserrage d'urgence du dispositif (14) d'actionnement, le coin (15) de desserrage d'urgence du dispositif (14) d'actionnement, par rapport à l'enveloppe (la) fixe en position.

15. Cylindre (1) de frein suivant l'une des revendications précédentes, **caractérisé en ce que** le verrouillage du dispositif (14) d'actionnement est déverrouillé par l'élément (17) de verrouillage dans la position de desserrage d'urgence du dispositif (14) d'actionnement, si le dispositif (14) d'actionnement est soumis à une pression de commande dans la position de desserrage d'urgence.

16. Cylindre (1) de frein suivant l'une des revendications précédentes, **caractérisé en ce que** le piston (16) de commande, l'élément (17) de verrouillage ayant le ressort (17e) et l'élément (18) d'accumulation de force sont adaptés les uns aux autres, de manière à ce que la force de pression nécessaire du piston de commande pour le déverrouillage de l'élément (17) de verrouillage soit plus petite que la force nécessaire pour mettre le dispositif (14) d'actionnement dans la position de desserrage.
